# EUROPEAN PATENT SPECIFICATION

(11) **EP 2 661 096 B1**
(45) Date of publication and mention of the grant of the patent: **10.12.2014**
(21) Application number: 12290153.1
(22) Date of filing: 04.05.2012
(51) Int. Cl.: H04Q 11/00

(54) **Method for monitoring an optical gate and associated equipment**
Verfahren zur Überwachung eines optischen Gatters und zugehörige Ausrüstung
Procédé de surveillance d'une grille optique et équipement associé

(43) Date of publication of application: 06.11.2013
(73) Proprietor: ALCATEL LUCENT, 92100 Boulogne-Billancourt (FR)
(72) Inventor: Pointurier, Yvan, 91620 Nozay (FR); Simonneau, Christian, 91620 Nozay (FR)
(74) Representative: Croonenbroek, Thomas Jakob

(56) References cited:
- EP-A2- 1 659 724
- FR-A1- 2 950 765

## Description

### BACKGROUND OF THE INVENTION

The present invention relates to the field of wavelength division multiplexing (WDM) optical network with packet granularity capability and more particularly to the optical gates used in the optical packet switching node in order to delete the data corresponding to the dropped packets.

Indeed, in network with packet granularity capability, optical packets are transmitted within time slots and, in each node called optical packet switching nodes, optical packets may be dropped and added. Thus, in order to add a new packet in a time slot to replace a dropped packet, this time slot has to.be freed (the optical signal corresponding to the dropped optical packet has to be deleted) in order to prevent the superimposition of several signals within one time slot of one channel which would result in a signal impossible to decode. To overcome this issue, optical gates capable of blocking and filtering out the light transmitted in a time slot of a channel are implemented in the node.

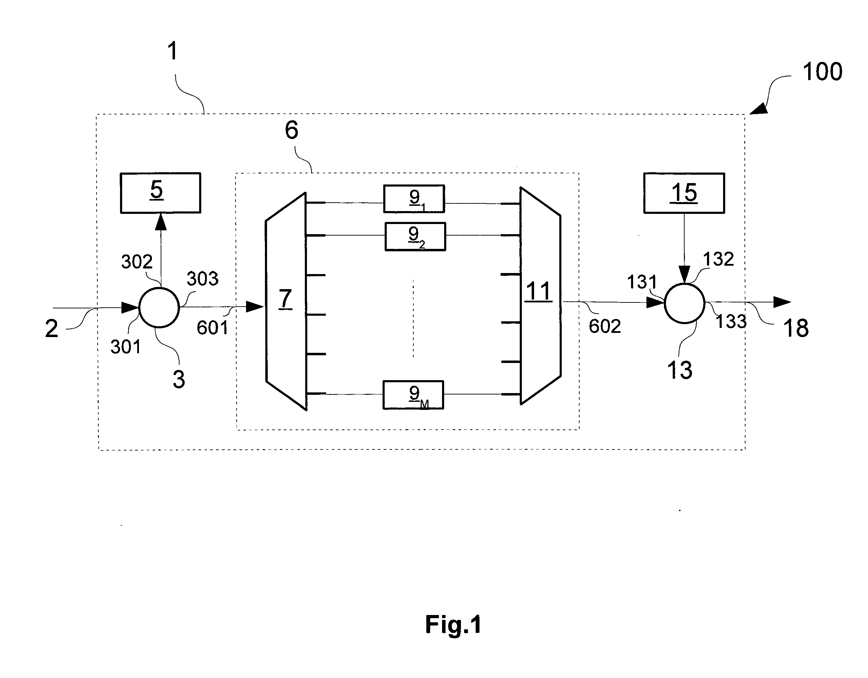

Fig.1 represents a diagram of a packet add/drop structure 1 of an optical packet switching node 100 of the state of the art. Such a structure is also disclosed in FR 2 950 765 A1. It comprises a dropping optical coupler 3 comprising an input 301 linked to the input 2 of the packet add/drop structure 1, a first output 302 linked to a fast tunable receiver 5 which is configured for detecting the dropped packets and a second output 303 linked to the input 601 of a switching structure 6, the dropping optical coupler 3 being configured for transmitting a wavelength division multiplexed (WDM) signal received on its input 301 to both its first 302 and its second 303 outputs. The switching structure 6 comprises a demultiplexer 7 configured for demultiplexing the multiplexed channels of the WDM signal into a plurality of channels which are transmitted respectively to a plurality of optical gates 9 configured for blocking or letting pass the packets of the time slots of each channel. At the output of the optical gates 9, the different channels are re-multiplexed by a multiplexer 11. The packet add/drop structure 1 also comprises a fast tunable transmitter 15 which is configured to emit signals corresponding to the added packets aimed at being inserted in the time slots freed or emptied by the optical gates 9. An adding optical coupler 13 comprising a first input 131 linked to the output 602 of the switching structure 6, a second input 132 linked to the fast tunable transmitter 15 and an output 133 linked to the output 18 of the packet add/drop structure 1, the said adding optical coupler 13 being configured to mix the signals received from its first 131 and its second 132 inputs and for transmitting the mixed signal to its output 133.

As a consequence, the role of the optical gates 9 is crucial in such packet add/drop structures 1 so that their correct functioning needs to be monitored regularly to detect as soon as possible a failure occurring on an optical gate 9.

In the state of the art, a solution to this problem is to add a photodetector, such as a photodiode, at the output of each optical gate 9 in order to measure the optical power level at the output of each gate and report the value of this power level to a control board in real-time. An example of a gateway in an add/drop node in which each element is separately monitored is disclosed in EP 1 659 724 A2
. However, two problems arise with such solution.

First, such solution requires the use of additional hardware components (i.e. photodiodes).

Second, as the optical gates may be integrated in a chip, either the photodetectors are also integrated on-chip which would means that a failure occurring on the chip would likely lead to a failure of both the optical gates and the monitoring components, i.e. the photodetectors. In order to prevent this issue, a solution is to implement the photodetectors off-chip but this solution would require a plurality of additional optical wires between the chip and the photodetectors which is difficult to implement and leads to additional costs.

### SUMMARY OF THE INVENTION

It is therefore an object of the present invention to overcome the above mentioned drawbacks of the state of the art and to provide a solution for monitoring the optical gates of a packet add/drop structure with components that work independently of the optical gates and without requiring expensive additional hardware components.

Thus, the present invention refers to a method for monitoring an optical gate of a packet add/drop structure of an optical packet switching node of a wavelength division multiplexing optical network, the packet add/drop structure comprising:
- a switching structure comprising a demultiplexer linked to an input of the switching structure, a multiplexer linked to an output of the switching structure and a plurality of optical gates set in parallel between the demultiplexer and the multiplexer, an optical gate being configured to filter out, in a blocking state, or to let pass, in a passing state, a packet received by the optical gate,
   wherein the output of the switching structure is also transmitted to a fast tunable receiver which is configured for:
- being tuned to a wavelength corresponding to a channel for which an associated optical gate is monitored,
- measuring the optical power level of that said wavelength at the output of the switching structure,
- comparing the measured optical power level with at least one predetermined threshold according to the state of the monitored optical gate.

The embodiments of the present invention also refer to a packet add/drop structure of an optical packet switching node of a wavelength division multiplexing optical network, the packet add/drop structure comprising:
- at least one fast tunable receiver,
- a switching structure comprising a demultiplexer linked to an input of the switching structure, a multiplexer linked to an output of the switching structure and a plurality of optical gates set in parallel between the demultiplexer and the multiplexer, an optical gate being configured to filter out, in a blocking state, or to let pass, in a passing state, a packet received by the optical gate,
   wherein the output of the switching structure is connected to one of the at least one fast tunable receiver, the said fast tunable receiver being configured for:

- receiving a signal outputted by the switching structure when an optical gate of the switching structure is monitored,
- being tuned to a wavelength corresponding to the channel for which an optical gate is monitored,
- measuring the optical power level of that said wavelength at the output of the switching structure,
- comparing the measured optical power level with at least one predetermined threshold according to the state of the monitored optical gate.

The embodiments of the present invention of the present invention also refer to an optical packet switching node comprising at least one packet add/drop structure.

### BRIEF DESCRIPTION OF THE DRAWINGS

FIG.**1** is a diagram of a packet add-drop structure of the state of the art;
FIG.**2** is a diagram of a network portion comprising three nodes;
FIG.**3** is a diagram of the states of the optical gates of a packet add/drop structure during a predetermined sequential switching scheme according to some embodiments of the present invention;
FIG.**4** is a diagram of the thresholds used to determined the correct functioning of an optical gate;
FIG.**5** is a diagram of a packet add/drop structure according to a first embodiment of the present invention;
FIG.**6** is a diagram of a packet add/drop structure according to a second embodiment of the present invention;
FIG.**7** is a diagram of a packet add/drop structure according to a third embodiment of the present invention;
FIG.**8** is a diagram of an optical switching node comprising packet add/drop structures according to a fourth embodiment of the present invention;

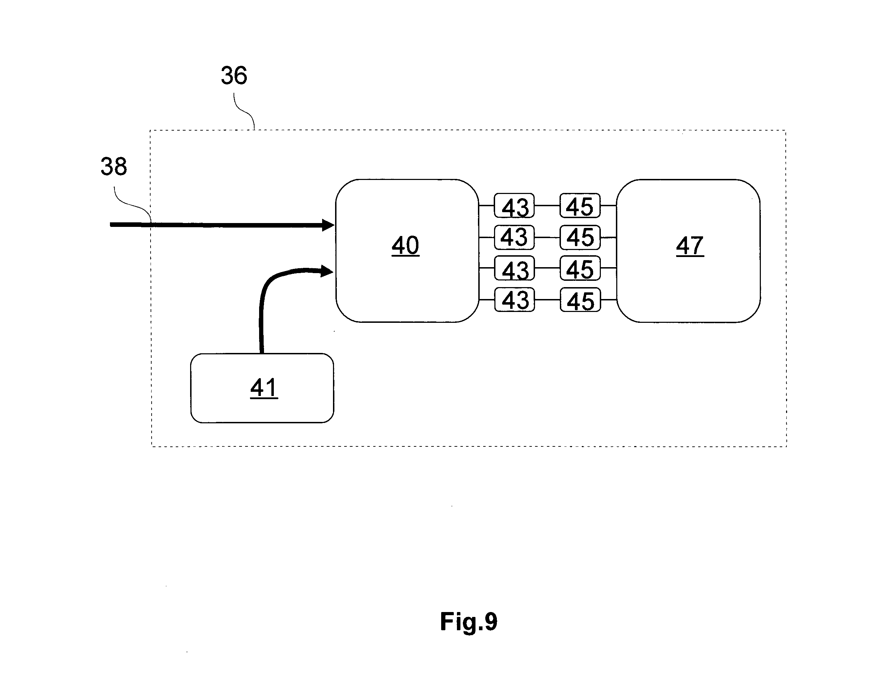

FIG.**9** is a diagram of the functional elements of a coherent receiver;

In these drawings, the elements having the same reference correspond to elements having a similar function. Furthermore, with elements composed of a reference number and an index, the reference number designates the class of element having a common function and the index defines a particular elements of the class.

### DETAILED DESCRIPTION OF THE INVENTION

As used herein, the term "WSS" refers to the acronym Wavelength Selective Switch;
As used herein, the term "SOA" refers to the acronym Semiconductor Optical Amplifier;
As used herein, the term "time slot" in a packet stream transmitted in a channel refers to a time interval wherein a packet is inserted. The time slot duration corresponds to the duration of a packet and an inter-packet gap duration;
As used herein, the term "dropped packet" refers to a packet for which the current node is the egress node so that the said packet is detected by a receiver and the data of the packet are decoded by the receiver. Inversely, the non-dropped packets are transmitted transparently toward another node.

The embodiments of the present invention refer to the monitoring of optical gates of a packet add/drop structure of an optical packet switching node using a fast tunable receiver of the node. An optical gate being configured to let a received signal pass when being in a passing state and for filtering a received signal out when being in a blocking state.

Furthermore, the embodiments of the present invention can be divided into two modes. In a first mode, optical gates are monitored during a dedicated time slot called control time slot while in a second mode, the monitoring is achieved while the monitored optical gates work normally. These two modes will now be described in detail.

### 1) First mode

In this first mode, a time slot is reserved for the monitoring of the optical gates whenever a monitoring of the optical gates is needed. This time slot is called control time slot and refers to a time wherein an optical signal without data is sent on the channel associated with an optical gate that needs to be monitored and wherein a predetermined switching scheme is applied to the monitored optical gates and the power level measured in each position of the monitored optical gate is compared with predetermined thresholds. A control time slot may be scheduled at predetermined time intervals according to a required failure detection time and/or a maximum proportion of control time slot with respect to the data time slot so that the throughput reduction is less than a predetermined value.

The number of optical gates that can be monitored within one time slot depends on the time necessary for the fast tunable receiver to be tuned to the wavelength of the channel associated with the monitored optical gate and the time required to achieve a power level measurement. For example, if we assume that it takes 50ns to a fast tunable receiver to switch from one wavelength to another and that it takes 10ns to the fast tunable receiver to measure the power level, then with a time slot of 10µs, the number of optical gates that can be monitored by one fast tunable receiver during one time slot is approximately hundred and forty (10µs/((50ns+10ns+10ns))=142.8 (two times 10ns for the two states of an optical gate).

Thus, if it is assumed that all the optical gates can be monitored in one time slot (which means that the number of channels is smaller or equal than 142) and if the monitoring time has to be less than 1% of the overall operational time then 1 time slot every 100 time slots will be a control packet reserved for monitoring. With a packet duration of 10µs, the failure detection time is 1ms.

According to a first embodiment, three different nodes are used for the monitoring of the optical gates of one of these optical nodes.

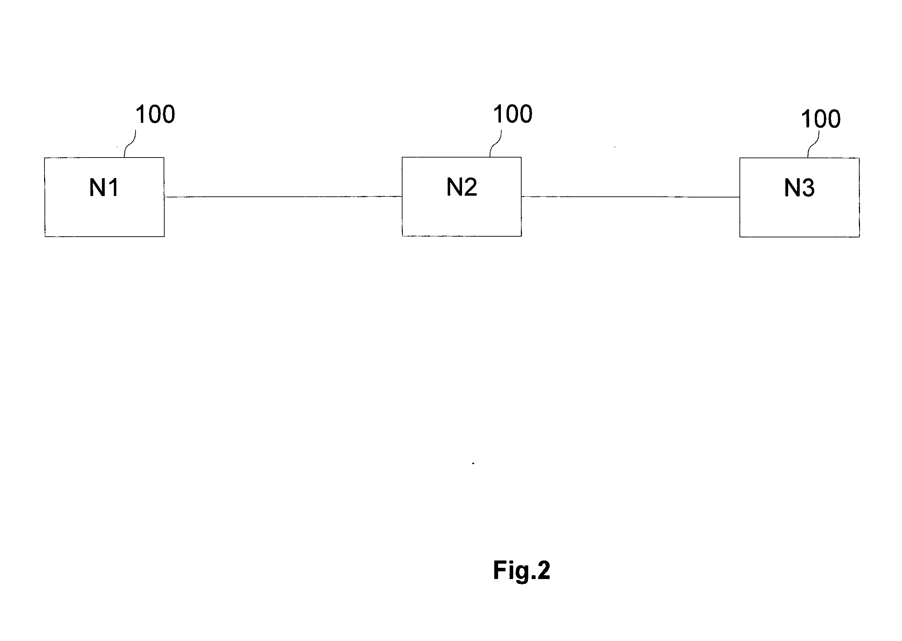

Fig.2 represents an example of a network portion comprising three optical packet switching nodes 100 noted N1, N2 and N3. Intermediate nodes may be located between N1 and N2 or between N2 and N3 and these three nodes may be part of an optical ring. Furthermore, it is assumed that node N1 comprises transmitters for sending optical signals simultaneously on the plurality of wavelength channels associated with the plurality of optical gates that need to be monitored. For example, in the case of a ring network, one node is usually dedicated to the emission of signals on all the channels and the other nodes have fast tunable transmitters 15 to add new packets in the freed time slots of the dropped packets. However, the time slots of the different channels may also be filled with light by several nodes.

In this embodiment, the structure of the packet add/drop structures 1 of the packet switching nodes Ni (i=1..3) remains as described in fig.1 and the monitored optical gates are the optical gates of the packet add/drop structure of node N2.

When a monitoring of the optical gates of node N2 is required, for example every 1ms or every 100 time slots, the transmitters of node N1 are configured to apply a control time slot. The application of this control time slot corresponds to the sending of dummy packets (optical signal without data) on each wavelength associated with an optical gate that needs to be monitored. If all the optical gates of node N2 are monitored during a control time, all the channels are fed with light in node N1 during a control time slot. When the signal corresponding to this control time slot is received at node N2, a predetermined sequential switching scheme is applied to the optical gates of node N2. In this sequential switching scheme, the monitored optical gates are set, one after the other, successively in a blocking and in a passing state during predetermined amounts of time.

Furthermore, in the presented embodiment, when the optical gates are not monitored during the control time slot, they are set in a passing state (or passing mode) in order to reduce the amount of time when no light is transmitted. Indeed, some optical components such as Erbium Doped Fiber Amplifiers (EDFAs) require a steady optical power level to function properly so that time intervals without light need to be avoided.

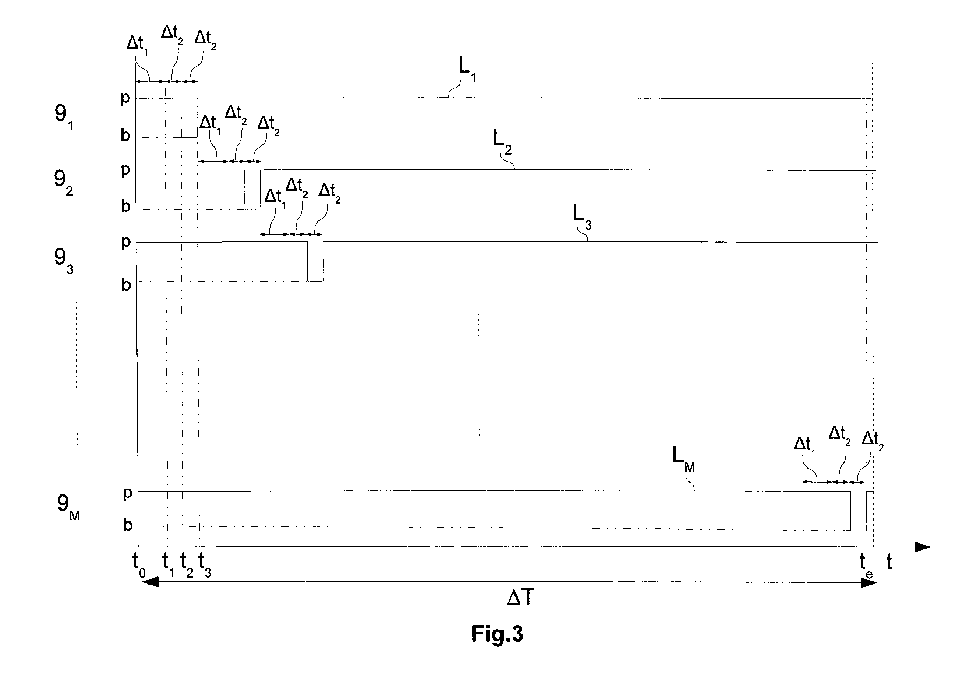

Fig.3 represents an example of sequential switching scheme during a control time slot of a duration ΔT in the case of M optical gates noted 9ᵢ (i=1...M) associated with M channels. The state of an optical gate during the control time slot is represented by the level of the horizontal lines Li (i=1...M), when the level is high, corresponding to the mark p (p=passing), an optical gate is in a passing state and when the level is low, corresponding to the mark b (b=blocking), the optical gate is in a blocking state. For sake of clarity, only the states of four optical gates have been represented. The sequential switching scheme starts at time to with a time interval Δt₁ which corresponds to the time required by a fast tunable receiver, located in node N3, to be tuned to the wavelength of the channel associated with the optical gate 9₁ so that no monitoring is achieved during this time interval and all the optical gates 9ₓ (x=1...M) are in a passing state. At time t₁ (where t₁=t₀+Δt₁), the first optical gate 9₁ starts to be monitored in a passing state during a time interval Δt₂ corresponding to the time required for a fast tunable receiver to do the measurement of the optical power level, herein called measurement time interval. Furthermore, it has to be noted that by sequential switching scheme, it is meant that the monitored optical gates are monitored one after the other (there is no need for a predetermined order in the sequence, for example the optical 9₂ may be monitored before the optical gate 9₁)

At time t₂ (where t₂=t₁+Δt₂), the optical gate 9₁ is set in a blocking state during another measurement time interval Δt₂ to do the monitoring of the blocking state.

Thus, at time t₃, the optical gate 9₁ has been monitored on each state and is set to a passing state. In practise, the time to transmit the signal from the optical gate 9₁ to the fast tunable receiver has to be considered as this travelling time is not negligible, especially if the optical gate and the fast tunable receiver are located in different nodes. Thus, if the travelling time is Atₜ, the monitoring in a passing state of the optical gate 9₁ will be performed at time t₁+Δtₜ by the fast tunable receiver. the travelling time necessary for the light to go from the optical gate to the fast tunable receiver is therefore taken into account to achieve a monitoring at the right time, that is to say when the optical gate is in the state that needs to be monitored. The fast tunable receiver is then tuned at the wavelength corresponding to the channel associated with the optical gate 9₂ which requires a time interval Δt₁. The optical gate 9₂ is then monitored in the passing state during a time interval Δt₂ and in a blocking state during a time interval Δt₂. This switching scheme is then applied sequentially on each optical gate 9ₓ (x=1...M) until time tₑ which corresponds either to the time when all the optical gates 9ₓ (x=1...M) have been monitored or the end of the control time slot. In practise, the time intervals Δt₁ and Δt₂ may be adjusted so that the end of the monitoring matches with the end of the time slot. Furthermore, in practice, the durations required to switch the optical gates from one state to the other have also to be considered and taken into account to determine the measurement time intervals, for example if this switching time of an optical gate is Δtₛ, the monitoring of the optical gate 9₁ in a passing state will start at time t₁+Δtₜ+ Δtₛ.

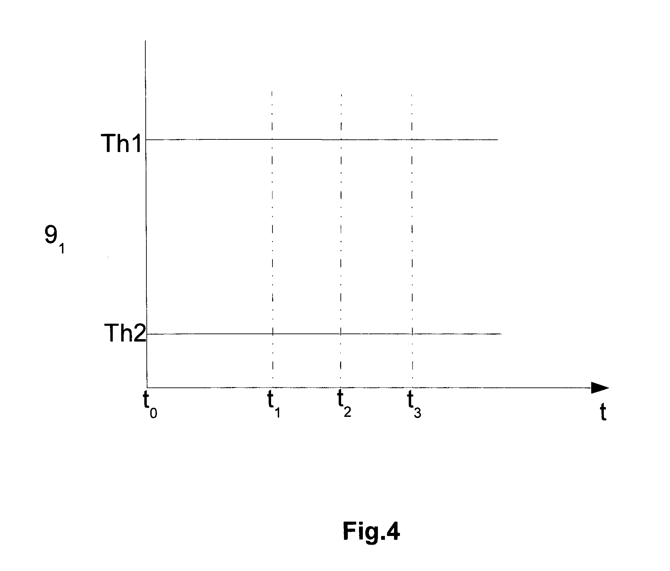

At the fast tunable receiver, the optical power level is measured during the measurement time interval Δt₂ shifted of the travelling time Δtₜ necessary for the signal to go from node N2 to node N3 and possibly of a switching time Δtₛ. The measured optical power level is then compared to a first predetermined threshold when the measurement corresponds to the monitoring of an optical gate in a passing state and to a second predetermined threshold when the measurement corresponds to the monitoring of an optical gate in a blocking state. Fig.4 shows a diagram with two threshold Th1 and Th2 used for the monitoring of the optical gate 9₁. The power level is measured by the fast tunable receiver between time t₁' and t₂', with t₁'=t₁+Δtₜ+ Δtₛ and t₂'=t₂+Δtₜ+Δtₛ. During this time interval, the optical gate 9₁ is supposed to be in a passing state. Thus, if the measured optical power level is lower than the first predetermined threshold Th1 during this time interval (tl'-t2'), the monitored optical gate 9₁ is considered to have a failure on the passing state. Then, the power level is measured by the fast tunable receiver between time t₂' and t₃' with t₃'=t₃+Δtₜ+ Δtₛ. During this time interval, the monitored optical gate 9₁ is supposed to be in a blocking state. The measured optical power level is therefore compared with the second threshold Th2 and if the measured power level is higher than the second threshold Th2, the monitored optical gate is considered to have a failure on the blocking state.

Besides, it has to be noted that the blocking state may be monitored before the passing state.

Furthermore, according to another switching scheme, the passing state of all the optical gates is monitored during a first time interval and the blocking state of all the optical gates is monitored during a second time interval, however, such scheme is longer as the fast tunable receiver has to be tuned a larger number of time.

It has also to be noted that if the components used in the network are not affected by variations of the optical power level, the optical gates can be set in a blocking state when they are not monitored during a measurement time interval, for example before time t₁ and after time t₃ in the case of the optical gate 9₁. Thus, this first embodiment enables the monitoring of the optical gates without adding additional hardware components with respect to a packet add/drop structure of a packet switching node of the state of the art.

According to a second embodiment, the fast tunable receiver used for the monitoring is located in the same node as the optical gates to be monitored. Indeed, having the receiver in a different node may lead to issues such as synchronization issues or adding more complexity to control the monitoring of the optical gates.

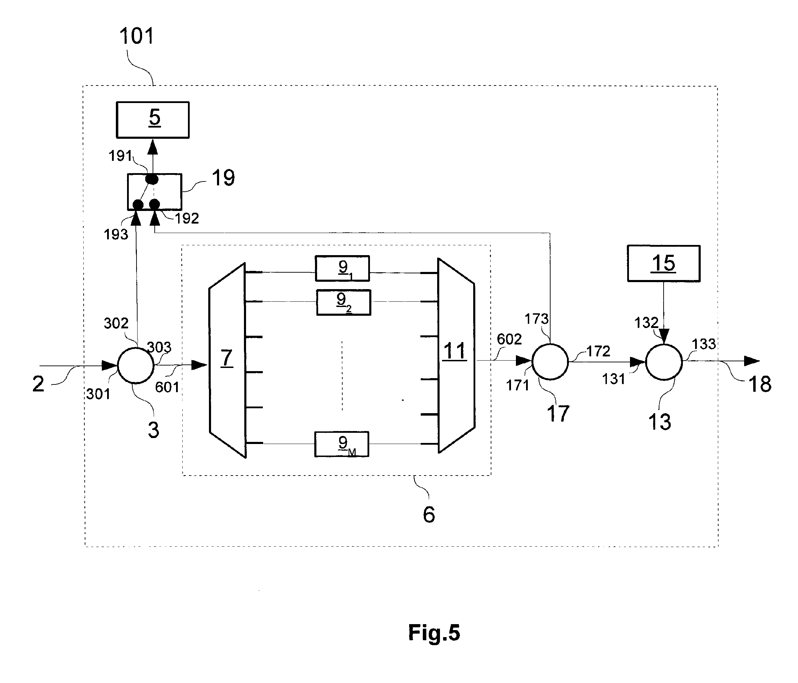

Fig.5 represents a diagram of a packet add-drop structure 101 according to the second embodiment of the present invention. This packet add/drop structure 101 differs from the packet/add drop structure 1 of the state of the art described in Fig.1 in that it comprises an additional optical coupler, herein called monitoring optical coupler 17 comprising an input 171 linked to the output 602 of the switching structure 6, a first output 173 linked to a first input 192 of a two-to-one switch, herein called dropping two-to-one switch 19 and a second output 172 linked to the input 131 of the adding optical coupler 13. This monitoring optical coupler 17 is configured for transmitting the signal received on its input 171 toward both its a first 172 and second 173 outputs.

The dropping two-to-one switch 19 comprises an output 191 linked to the fast tunable receiver 5 and a second input 193 linked to the first output 302 of the dropping optical coupler 3. This dropping two-to-one switch 19 is configured for transmitting the signal coming from the monitoring optical coupler 17 and blocking the signal coming from the dropping optical coupler 3 when optical gates 9 of the switching structure 6 are monitored, i.e. during a control time slot, and for transmitting the signal coming from the dropping optical coupler 3 and blocking the signal coming from the monitoring optical coupler 17 otherwise.

Besides, it has to be noted that the different additional optical fibres used to link the different components and represented by the lines in the different diagram will not be detailed.

In this embodiment, the sequential switching scheme is the same as for the first embodiment and the only additional step concerns the switching of the dropping two-to-one switch 19 at time to of the start of the control time slot and at the time tₑ of the end of the control time slot.

Thus, with this second embodiment the only additional hardware components with respect to a packet add/drop structure of the state of the art is the dropping two-to-one switch 19, the monitoring optical coupler 17 which are cheap components so that the cost of the implementation of the monitoring according to this second embodiment remains low.

According to a third embodiment, the transmitter used for emitting optical signal during the control time slot is located in the same node as the optical gates to be monitored so that all the equipments necessary for the monitoring are gathered in a single node.

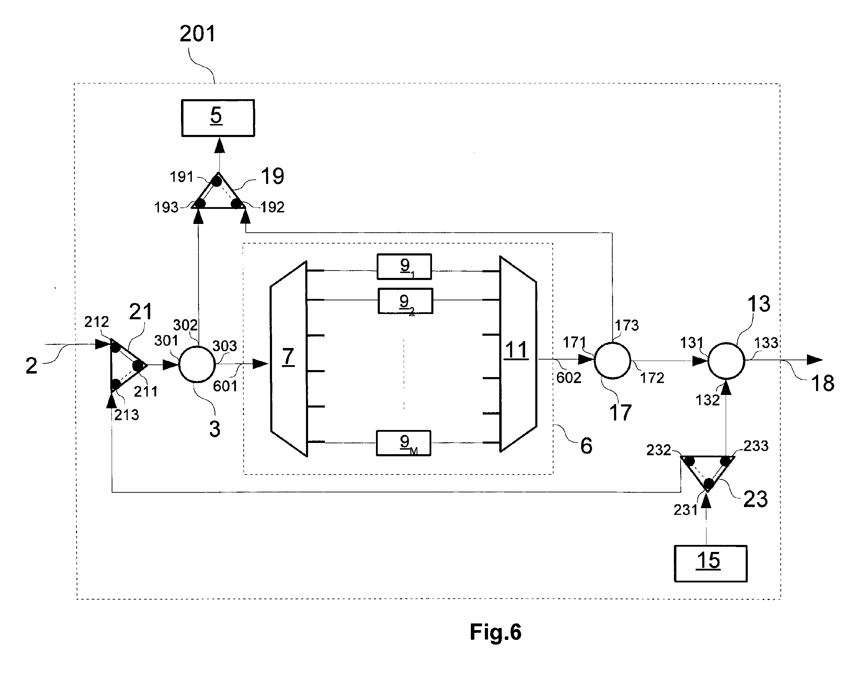

Fig.6 represents a diagram of a packet add-drop structure 201 according to the third embodiment of the present invention. This packet add/drop structure 201 differs from the packet/add drop structure 101 of the second embodiment described in Fig.4 in that it comprises an additional two-to-one switch, herein called adding two-to-one switch 21 and an additional one-to-two switch, herein called adding one-to-two switch 23.

The adding two-to-one switch 21 comprises a first input 212 linked to the input 2 of the packet add-drop structure 201, a second input 213 linked to a first output 232 of an adding one-to-two switch 23 and an output 211 linked to the input 301 of the dropping optical coupler 3,

The adding one-to-two switch 23 comprises an input 231 linked to the fast tunable transmitter 15 and a second output 233 linked to the second input 132 of the adding optical coupler 13.

The adding two-to-one switch 21 is configured for transmitting the signal coming from the adding one-to-two switch 23 and blocking the signal coming from the input 2 when optical gates of the switching structure 6 are monitored, i.e. during a control time slot, and for transmitting the signal coming from the input 2 and blocking the signal coming from the adding one-to-two switch 23 otherwise.

The adding one-to-two switch 23 is configured for transmitting the signal coming from the fast tunable transmitter 15 toward the adding two-to-one switch 21 when optical gates of the switching structure 6 are monitored, i.e. during a control time slot, and toward the adding optical coupler 13 otherwise.

In this embodiment, the sequential switching scheme is the same as for the second embodiment and the only additional steps concern the switching of the adding two-to-one switch 21 and the adding one-to-two switch 23 at time to of the start of the control time slot and at the time tₑ of the end of the control time slot.

Concerning the fast tunable transmitter 15, either the fast tunable transmitter 15 comprises a plurality of transmitters tuned to the plurality of wavelengths corresponding to the channels associated with the monitored optical gates or the fast tunable transmitter is tuned sequentially to each wavelength corresponding to each channel associated with a monitored optical gate. However, this last option may be applied only if there is no component of the network that are affected by variations in the optical power level. Indeed, for each channel, only a fraction time Δt₂ of the time slot will be fed with light.

Thus, with this third embodiment the only additional hardware components with respect to a packet switching node of the state of the art are the dropping two-to-one switch 19, the monitoring optical coupler 17, the adding two-to-one switch 21 and the adding one-to-two switch 23 which are cheap components so that the cost of the implementation of the monitoring according to this third embodiment remains low.

The embodiments of the first mode enable therefore monitoring a high number of optical gates of a switching structure 6 within a single time slot so that such monitoring enables a fast failure detection with a limited impact on the network performance.

### 2) Second mode

This second mode relies on the fact that in a packet switching node, there exists most of the time an idle fast tunable receiver, either because the idle fast tunable receiver is reserved for protection in case of failure on a working receiver or because an optical packet switching node usually comprises a plurality of packet add/drop structures comprising each a fast tunable receiver but when the traffic decreases, a packet add/drop structure may remain in an idle state. In the same way, a packet add/drop structure may comprise several fast tunable receivers and one may be in an idle state when the traffic decreases. Thus, the idea is to use a fast tunable receiver in an idle state to achieve the monitoring of the optical gates. Alternatively, an additional fast tunable receiver may be dedicated to the monitoring.

In this second mode, no control time slot is needed and the fast tunable receiver used for the monitoring is linked to the output of the switching structure comprising the optical gates that need to be monitored. The fast tunable receiver used for the monitoring is then tuned sequentially to the wavelengths corresponding to the channels associated with the monitored optical gates and the optical power level is measured for each wavelength. The optical power level measured by the fast tunable receiver used for the monitoring is then compared to predetermined thresholds according to the state of the monitored optical gate at the time of measurement. However, it has to be noted that in this mode only one state of an optical gate may be monitored within one time slot and this state cannot be chosen as it is imposed by the traffic. For example if an optical gate is in a passing state when the idle fast tunable receiver is tuned to the wavelength corresponding to the channel associated with this optical gate, the monitoring will be achieved on the passing state only. As a consequence, a state of an optical gate may not be monitored during a relatively large amount of time if the optical gate is always in the other state during monitoring. Furthermore, as for the previous mode, the idle fast tunable receiver used for the monitoring may be located in a subsequent node. Furthermore, in this embodiment, all the optical gates may be monitored within a single time slot (if the number of optical gates to monitor is not too large with respect to the fast tunable receiver switching and measuring capacities) but only one state is monitored for each optical gate.

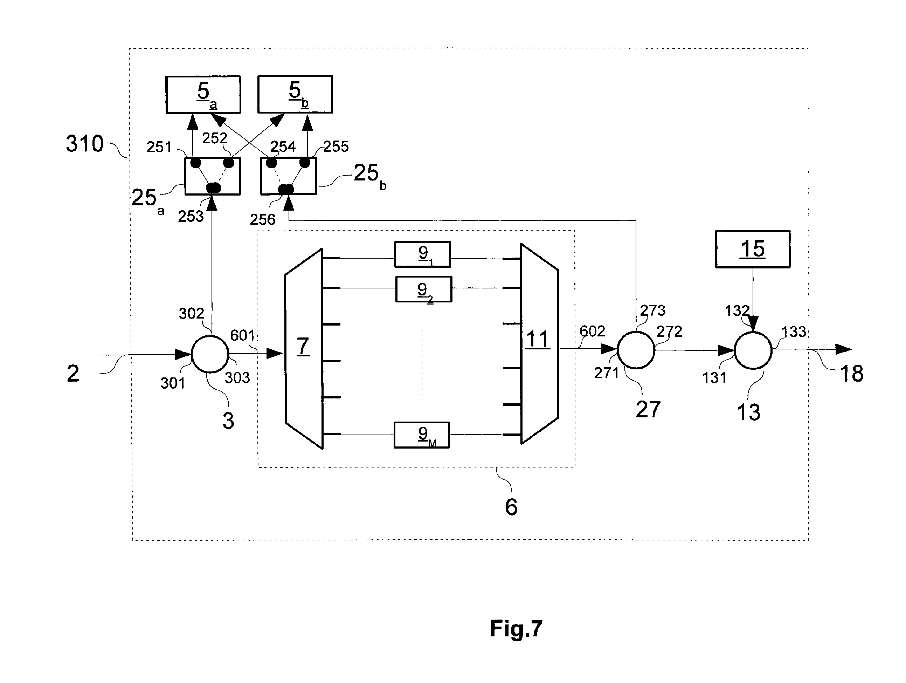

Fig.7 represents a diagram of a packet add-drop structure 310 according to a fourth embodiment of the present invention wherein a fast tunable receiver 5_{b} is reserved for protection.

This packet add/drop structure 310 differs from the packet/add drop structure 1 described in Fig. 1 in that it comprises a first and a second fast tunable receivers 5ₐ and 5_{b}, a first and a second additional one-to-two switch 25ₐ and 25_{b} and an additional optical coupler, herein called monitoring optical coupler 27.

The second fast tunable receiver 5_{b} is used for protection in case of failure of the first fast tunable receiver 5ₐ. The second fast tunable receiver 5_{b} is therefore idle when the first fast tunable receiver 5ₐ works correctly.

The first one-to-two switch 25ₐ comprises an input 253 linked to the first output 302 of the dropping optical coupler 3, a first output 251 linked to the first tunable receiver 5ₐ and a second output 252 linked to the second fast tunable receiver 5_{b}. The first one-to-two switch 25ₐ is configured to route or to transmit a signal received from the dropping optical coupler 3 toward one of the fast tunable receiver 5ₐ or 5_{b}.

The monitoring optical coupler 27 comprises an input 271 linked to the output 602 of the switching structure 6, a first output 272 linked to the first input 131 of the adding optical coupler 13 and a second output 273 linked to the input 256 of the second one-to-two switch 25_{b}. The monitoring optical coupler 27 is configured to transmit a signal received from the switching structure 6 toward both the optical coupler 13 and the second one-to-two switch 25_{b}.

The second one-to-two switch 25_{b} comprises a first 254 and a second 255 outputs linked respectively to the first 5ₐ and the second 5_{b} fast tunable receivers. The second one-to-two switch 25_{b} is configured to transmit a signal received from the monitoring optical coupler 27 toward one of the fast tunable receivers 5ₐ or 5_{b}.

The first and second one-to-two switches 25ₐ and 25_{b} are synchronized so that when the first one-to-two switch 25ₐ transmits a signal toward the first fast tunable receiver 5ₐ, the second one-to-two switch 25_{b} transmits a signal toward the second fast tunable receiver 5_{b} and conversely. Besides the first and second one-to-two switches 25ₐ and 25_{b} may be replaced by a two-to-two switch which would be configured accordingly.

Thus, in normal conditions, the first tunable receiver 5ₐ receives the signal coming from the dropping optical coupler 3 and detect the optical packets that need to be dropped while the second fast tunable receiver 5_{b} receives the signal coming from the optical coupler 27 and is tuned sequentially to the wavelength corresponding to the channels associated with optical gates 9 of the switching structure 6 and for each wavelength, the second fast tunable receiver 5_{b} measures the optical power level and compare this level with predetermined thresholds according to the state of the monitored optical gate 9. For example, if an optical gate 9 is in a blocking state and the measured optical power level is above a first predetermined threshold, the blocking state of the monitored optical gate 9 is considered as faulty whereas if an optical gate 9 is in a passing state and the measured optical power level is below a second predetermined threshold, the passing state of the monitored optical gate 9 is considered as faulty.

When a failure occurs on the first fast tunable receiver 5ₐ, the signal received from the dropping optical coupler 3 is transmitted to the second fast tunable receiver 5_{b} by the first one-to-two switch 25ₐ and the second fast tunable receiver 5_{b} is then configured for detecting the dropped optical packets. No monitoring is possible anymore until the failure of the first fast tunable receiver 5ₐ is fixed. When the failure is fixed, the first tunable receiver 5ₐ can be used for the monitoring.

Alternatively, a higher number of fast tunable receivers can be used with one of the fast tunable reserved for protection. However, if no fast tunable receiver is reserved for protection, when one of the fast tunable receivers is idle, the said idle fast tunable receiver can be used for the monitoring of the optical gates.

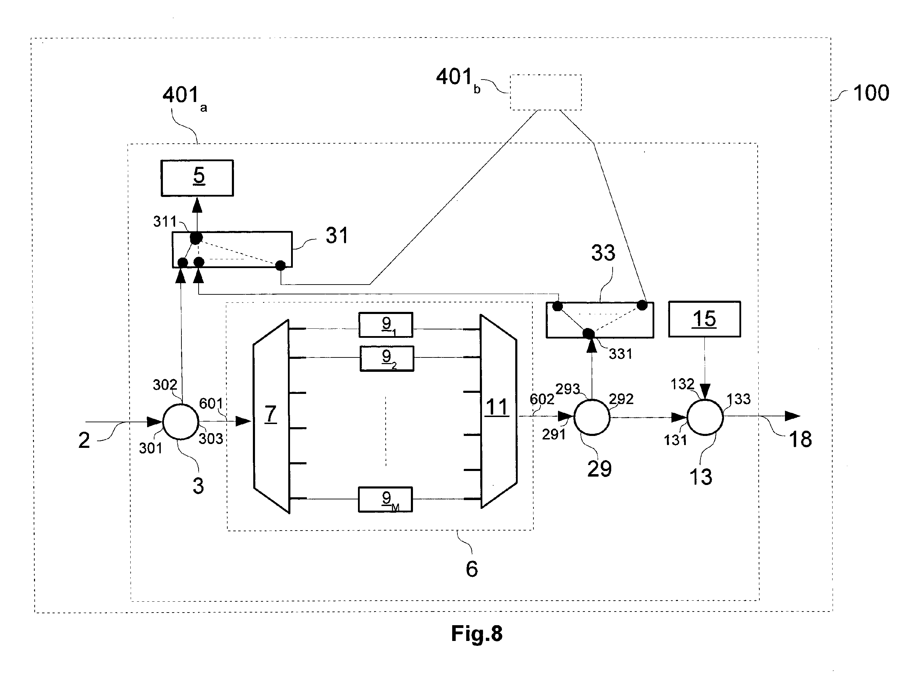

Fig.8 represents a diagram of an optical packet switching node 100 comprising a plurality of packet add/drop structure 401 according to a fifth embodiment of the present invention. For sake of clarity, only two packet add/drop structure 401a and 401b are represented.

These packet add/drop structures 401 differ from the packet/add drop structure 1 of the state of the art described in Fig.1 in that it comprises an additional optical coupler herein called monitoring optical coupler 29, a N-to-one switch 31 and a one-to-L switch 33.

The monitoring optical coupler 29 comprises an input 291 linked to the output 602 of the switching structure 6, a first output 292 linked to the first input 131 of the adding optical coupler 13 and a second output 293 linked to the input 331 of the one-to-L switch 33.

The N-to-one switch 31 comprises an output 311 linked to the fast tunable receiver 5 and a plurality of inputs. One input is linked the first output 302 of the dropping optical coupler 3, another input is linked to an output of the one-to-L switch 33, the other inputs being linked to an output of a one-to-L switch 33 of another packet add/drop structures 401, for example the packet add/drop structure 401b in the present case.

The one-to-L switch 33 comprises a plurality of outputs linked respectively to an input of a N-to-one switch 31 of a packet add/drop structures 401.

The monitoring optical coupler 29 is configured to transmit the signal received from the switching structure 6 to both the adding optical coupler 13 and the one-to-L switch 33. The one-to-L switch 33 is configured for transmitting the signal received from the monitoring optical coupler 29 to an idle fast tunable receiver 5 of one of the plurality of packet add/drop structures 401. The monitoring of the optical gates 9 is then achieved by the idle fast tunable receiver 5 in the same way as the fast tunable receiver 5 reserved for the protection in the fourth embodiment. If no fast tunable receiver 5 is idle, for example when the packet switching node is used at its full capacity, no monitoring is achieved.

The N-to-one switch 31 is configured for transmitting the signal received from the dropping optical coupler 3 when a signal to be processed is received at the input 2 of the packet add/drop structure 401ₐ and for monitoring the optical gates 9 of the switching structure 6 of one of the plurality of packet add/drop structures, for example the packet add/drop structure 401_{b} when no signal to be processed is received at the input 2 of the packet add/drop structure 401ₐ (a receiver of an idle packet add/drop structure may monitor the optical gates its own packet add/drop structure if an optical signal is transmitted through the idle switching structure). The monitoring may be performed so that during one time slot, an idle fast tunable receiver 5 monitors the optical gates of one working packet add/drop structure 401. Thus, if an optical packet switching node comprises six packet add/drop structures 401 and if a fast tunable receiver 5 remains idle during five time slots, the idle fast tunable receiver 5 may monitor the optical gates 9 of the five other packet add/drop structures 401, the N-to-one switch 31 enabling to switch from one packet add/drop structure 401 to another between two time slots. However, depending on the number of optical gates per packet add/drop structure and the time required for the idle fast tunable receiver 5 to monitor each optical gate, other monitoring scheme may be applied.

The embodiments of the second mode enable therefore to monitor optical gates of a switching structure 6 whenever a fast tunable receiver 5 of an optical packet switching node 100 remains idle which is particularly often in case of bursty traffic or in case of additional fast tunable receivers 5 used for protection. Furthermore, the cost of the required additional equipments remains limited and the performance of the network is not impacted.

The possible implementations of the equipments described in the previous embodiments will now be described.

The multiplexers and demultiplexers may be implemented as array waveguide gratings (AWG) based either on a semi-conductor 3-5 technology, a planar silicium technology or silicon photonics technology. Alternatively, wavelength Selective Switches (WSS) based on micro-mechanical systems (MEMS) or liquid crystals on silicon (LcoS) may also be used.

The optical gates are implemented preferably as semiconductor optical amplifier (SOA) gates. Indeed, other technologies such as Mach-Zehnder modulators (MZM), ring resonators, acousto-optic switches, liquid crystal on silicon (LCoS) or micro-electromechanical systems (MEMS) could also be used but in the state of the art, these components may have drawbacks for the present application such as a slow functioning with respect to a packet duration or a low blocking efficiency.

Furthermore, the switching structure 6 comprising the demultiplexer 7, the optical gates 9 and the multiplexer 11 may be integrated according to different options:
- the optical gates are implemented as SOA and the demultiplexer and the multiplexer are also integrated as semi-conductors on the same chip,
- the optical gates are implemented as SOA and the demultiplexer and the multiplexer are integrated as Silicon Photonics (SiP)
- the optical gates, the demultiplexer and the multiplexer are implemented as Silicon Photonics, the optical gates are then photonic switches (Mach-Zehnder or ring resonator type). The optical gates may also be implemented as a high-speed variable optical attenuator.

The x-to-x switches may be implemented as directional optical coupler with index change capability of the optical guide to create or not a matching with the incoming optical signal such as a Polarized Lead Zirconium Titanate (PLZT) directional coupler or as an active coupler comprising a passive optical coupler combined with optical gates at each output of the passive optical coupler or as a waveguides network with an active guide to select the output port for the received signal.

The fast tunable transmitters may be implemented as a fast tunable continuous wave (CW) laser or as an array of lasers emitting at wavelengths corresponding to the different channels coupled to a fast selector or a filter that selects at least one of the wavelength to be transmitted.

The fast tunable receivers may be implemented either as a coherent receiver (36) or as an array of receivers combined with a demultiplexer, each receiver being tuned to one of the wavelengths corresponding to one of the received channels and the demultiplexer being configured to distribute the different received channels respectively toward the receivers of the array.

Fig.10 represents the functional elements of an embodiment of a coherent receiver 36. The coherent receiver 36 comprises an input 38 that receives a signal comprising a plurality of multiplexed channels. However, it has to be noted that the number of channels that a coherent receiver 36 can process without introducing too much loss is limited, generally to ten channels with the coherent receivers of the state of the art. The input 38 is linked to a first input of a coherent mixer 40. The second input of the coherent mixer 40 is linked to a local oscillator 41 implemented as a fast tunable laser which is tuned, for each time slot, to the wavelength corresponding to the channel that comprises a packet that needs to be dropped or a signal that needs to be measured. Similarly to the fast tunable transmitters 15, the local oscillator 41 may be implemented by an array of lasers emitting a set of wavelengths corresponding to the channels of the band and coupled to a fast selector (the number of lasers in the array being equal to the number of channels that can be processed).

The coherent mixer 40 comprises for instance a polarization beam splitter (PBS), a 50/50 optical splitter, and two 90° optical hybrids. The polarization beam splitter is configured for splitting the signal received at the input 38 into two signals having orthogonal polarizations. The 50/50 optical splitter is configured to split the signal received from the local oscillator 41 in two signals having half power each. One output of the PBS and one output of the 50/50 splitter are sent to a 90° hybrid coupler. The other PBS output and the other output of the 50/50 splitter are sent to the second 90° optical hybrid. Therefore, the inphase and quadrature components of both polarizations are retrieved at the outputs of the coherent mixer 40. These four components are then detected by four photo-detectors 43, generally implemented as balanced photodiodes, which are linked respectively to four analogical to digital (A/D) converters 45. The obtained four digital signals are then used to feed digital signal processing means 47 that are configured for retrieving the encoded data.

Thus, the establishment of a control time slot and the use of a fast tunable receiver as measurement device for the optical power level of the signal outputted by the optical gates during the control time slot as well as the use of an idle fast tunable receiver as measuring device for the optical power level of the signal outputted by the optical gates enable to monitor the optical gates of the packet add/drop structures of the optical packet switching nodes without requiring expensive additional equipments. With these embodiments, a failure can be detected in a short amount of time and the network performance are either barely or not impacted by the monitoring. Furthermore, with these embodiments, the monitoring device is not integrated on a common chip as the equipments to be monitored and a plurality of additional wires to connect the monitoring device with the control board are not required.

## Claims

1. Method for monitoring an optical gate (9) of a packet add/drop structure (1, 101, 201, 310, 401) of an optical packet switching node (100) of a wavelength division multiplexing optical network, the packet add/drop structure (1, 101, 201, 310, 401) comprising:
- a switching structure (6) comprising a demultiplexer (7) linked to an input (601) of the switching structure (6), a multiplexer (11) linked to an output (602) of the switching structure (6) and a plurality of optical gates (9) set in parallel between the demultiplexer (7) and the multiplexer (11), an optical gate (9) being configured to filter out, in a blocking state, or to let pass, in a passing state, a packet received by the optical gate (9), **characterised in that** the output of the switching structure (6) is also transmitted to a fast tunable receiver (5) which is configured for:
- being tuned to a wavelength corresponding to a channel for which an associated optical gate (9) is monitored,
- measuring the optical power level of that said wavelength at the output (602) of the switching structure (6),
- comparing the measured optical power level with at least one predetermined threshold according to the state of the monitored optical gate (9).

2. Method in accordance with claim 1 wherein the fast tunable receiver (5) is located in a subsequent optical packet switching node (100) of the wavelength division multiplexing optical network.

3. Method in accordance with claim 1 wherein the fast tunable receiver (5) is located in another packet add/drop structure (401) of the optical packet switching node (100).

4. Method in accordance with claim 1 wherein the packet add/drop structure (1, 101, 201, 310, 401, 501) comprises at least one fast tunable receiver and the fast tunable receiver (5) is one of the at least one fast tunable receiver.

5. Method in accordance with one of the previous claims wherein the fast tunable receiver (5) used for the monitoring is in an idle state.

6. Method in accordance with one of the previous claims wherein the fast tunable receiver (5) is a coherent receiver (36) and the step of being tuned to a wavelength corresponding to a channel for which an associated optical gate (9) is monitored corresponds to the tuning of a local oscillator (41) of the coherent receiver (36) to the said wavelength corresponding to the channel for which an associated optical gate (9) is monitored.

7. Method in accordance with one of the previous claims wherein a plurality of optical gates of the switching structure (6) is monitored, a time slot is reserved for the monitoring of the plurality of optical gates (9) and a predetermined sequential switching scheme is applied to the monitored optical gates (9).

8. Method in accordance with claim 7 wherein the predetermined sequential switching scheme comprises the step of setting the monitored optical gates (9), one after the other, successively in a passing and in a blocking state during predetermined amounts of time.

9. Method in accordance with claim 8 wherein the predetermined amounts of time are determined according to the time required for the fast tunable receiver (5) used for the monitoring to be tuned to the wavelength corresponding to the channel associated with the monitored optical gate (9) and the time required for the fast tunable receiver (5) to measure an optical power level of a received signal.

10. Packet add/drop structure (1, 101, 201, 310, 401) of an optical packet switching node (100) of a wavelength division multiplexing optical network, the packet add/drop structure (1, 101, 201, 310, 401) comprising:
- a switching structure (6) comprising a demultiplexer (7) linked to an input (601) of the switching structure (6), a multiplexer (11) linked to an output (602) of the switching structure (6) and a plurality of optical gates (9) set in parallel between the demultiplexer (7) and the multiplexer (11), an optical gate (9) being configured to filter out, in a blocking state, or to let pass, in a passing state, a packet received by the optical gate (9),
**characterised in that** it also comprises at least one fast tunable receiver(5),
wherein
the output of the switching structure (6) is connected to one of the at least one fast tunable receiver (5), the said fast tunable receiver (5) being configured for:
- receiving a signal outputted by the switching structure (6) when an optical gate (9) of the switching structure (6) is monitored,
- being tuned to a wavelength corresponding to the channel for which an optical gate (9) is monitored,
- measuring the optical power level of that said wavelength at the output of the switching structure (6),
- comparing the measured optical power level with at least one predetermined threshold according to the state of the monitored optical gate (9).

11. Packet add/drop structure (1, 101, 201) in accordance with claim 10 comprising a transmitter (15) configured for reserving a time slot when optical gates (9) of the switching structure (6) are monitored and wherein the switching structure (6) is configured for applying a predetermined sequential switching scheme to the monitored optical gates (9) during the reserved time slot.

12. Packet add/drop structure (101, 201) in accordance with claim 10 or 11 wherein it also comprises:
- a dropping optical coupler (3) comprising an input (301) linked to an input (2) of the packet add/drop structure (101, 201) and configured for transmitting a received signal toward both a first output (302) and a second output (303) linked to the input (601) of the switching structure (6),
- a monitoring optical coupler (17) comprising an input (171) linked to the output (602) of the switching structure (6) and configured for transmitting the signal received from the switching structure (6) toward both a first output (172) linked to an output (18) of the packet add/drop structure (101, 201) and to a second output (173),
- a dropping two-to-one switch (19) comprising an output (191) linked to the at least one fast tunable receiver (5), a first input (192) linked to the monitoring optical coupler (17) and a second input (193) linked to the first output (302) of the dropping optical coupler (3), the said dropping two-to-one switch (19) being configured for letting the signal received on its first input (192) through and blocking the signal received on its second input (193) when an optical gate (9) of the switching structure (6) is monitored and for letting the signal received on its second input (193) through and blocking the signal received on its first input (192) otherwise.

13. Packet add/drop structure (201) in accordance with one of the claims from 10 to 12 wherein it also comprises:
- a fast tunable transmitter (15),
- an adding two-to-one switch (21) comprising an output (211) linked to the input (301) of the dropping optical coupler (3), a first input (212) linked to an input (2) of the packet add/drop structure (201) and a second input (213), the adding two-to-one switch (21) being configured for letting the signal received on its second input (213) through and blocking the signal received on its first input (212) when an optical gate (9) of the switching structure (6) is monitored and for letting the signal received on its first input (212) through and blocking the signal received on its second input (213) otherwise;
- an adding optical coupler (13) comprising a first input (131) linked to the output (172) of the monitoring optical coupler (17) and a second input (132) and configured for mixing the signals received on its first and its second input and for transmitting the mixed signal to its output (133) which is linked to output (18) of the packet add/drop structure (201),
- an adding one-to-two switch (23) comprising an input (231) linked to the fast tunable transmitter (15), a first output (232) linked to the second input (213) of the adding two-to-one switch (21) and a second output (233) linked to the second input (132) of the adding optical coupler (13) and configured for transmitting the signal received on its input (231) toward its first output (232) when an optical gate (9) of the switching structure (6) is monitored and toward its second output (233) otherwise.

14. Packet add/drop structure (310) in accordance with claim 10 wherein it also comprises:
- a first (5ₐ) and a second (5_{b}) fast tunable receivers,
- a first one-to-two switch (25ₐ) comprising a first (251) and a second (252) outputs linked respectively to the first and the second fast tunable receivers (5ₐ, 5_{b}) and an input (253), the said first one-to-two switch (25ₐ) being configured for transmitting a signal received on its input (253) toward its first (251) or its second (252) output,
- a dropping optical coupler (3) comprising an input (301) linked to an input (2) of the packet add/drop structure (310), a first output (302) linked to the input (253) of the first one-to-two switch (25ₐ) and a second output (303) linked to the input (601) of the switching structure (6), the said dropping optical coupler (3) being configured for transmitting a signal received on its input (301) toward both its first (302) and its second (303) outputs,
- a fast tunable transmitter (15),
- an adding optical coupler (13) comprising a first input (131), a second input (132) linked to the fast tunable transmitter (15) and an output linked to an output (18) of the packet add/drop structure (310), the said adding optical coupler (13) being configured for mixing the signals received on its first and second inputs and for transmitting the mixed signal to its output,
- a second one-to-two switch (25_{b}) comprising a first (254) and a second (255) outputs linked respectively to the first (5ₐ) and the second (5_{b}) fast tunable receivers, and an input (256), the said second one-to-two switch (25_{b}) being configured for transmitting a signal received on its input toward its first or its second output,
- a monitoring optical coupler (27) comprising an input (271) linked to the output (602) of the switching structure (6), a first output (272) linked to the input (131) of the adding optical coupler (13) and a second output (273) linked to the input (256) of the the second one-to-two switch (25_{b}), the said monitoring optical coupler (27) being configured for transmitting the signal received on its input (271) toward both its first (272) and its second (273) outputs.

15. Optical packet switching node (100) comprising at least one packet add/drop structure (1, 101, 201, 310) in accordance with one of the claims from 10 to 14.

16. Optical packet switching node (100) in accordance with claim 15 combined with claim 10 wherein it comprises a plurality of packet add/drop structure (401), the said packet add/drop structures (401) also comprising:
- an N-to-one switch (31) comprising an output (311) linked to the fast tunable receiver (5) and a plurality of inputs, the said N-to-one switch (31) being configured for transmitting a signal received on one of its inputs to its output (311),
- a dropping optical coupler (3) comprising an input (301) linked to an input (2) of the packet add/drop structure (401), a first output (302) linked to an input of the N-to-one switch (31) and a second output (303) linked to the input (601) of the switching structure (6), the said dropping optical coupler (3) being configured for transmitting a signal received on its input (301) toward both its first (302) and its second (303) outputs,
- a fast tunable transmitter (15),
- an adding optical coupler (13) comprising an output (133) linked to an output (18) of the packet add/drop structure (401), a first input (131) and a second input (132) linked to the fast tunable transmitter (15), the said adding optical coupler (13) being configured for mixing the signals received from its first (131) and second (132) inputs and for transmitting the mixed signal to its output (133),
- a monitoring optical coupler (29) comprising an input (291) linked to the output (602) of the switching structure (6), a first output (292) linked to the second input (131) of the adding optical coupler (13) and a second output (293), the said monitoring optical coupler (29) being configured for transmitting the signal received from its input (291) toward both its first (292) and its second (293) outputs,
- a one-to-L switch (33) comprising an input (331) linked to the second output (293) of the monitoring optical coupler (29) and a plurality of outputs, one of the outputs being linked to an input of the N-to-one switch (31) and the other outputs being linked respectively to an input of an N-to-one switch (31) of other packet add/drop structures (401), the said one-to-L switch (33) being configured for transmitting a signal received on its input (331) toward one of its outputs,
the other inputs of the N-to-one switch (31) being linked to an output of a one-to-L switch (33) of another packet add/drop structure (401).

## Patentansprüche

1. Verfahren zur Überwachung eines optischen Tors (9) einer Paket-Add/Drop-Struktur (1, 101, 201, 310, 401) eines optischen Paketvermittlungsknotens (100) eines optischen Wellenlängenmultiplex-Netzwerks, wobei die Paket-Add/Drop-Struktur (1, 101, 201, 310, 401 umfasst:
- Eine Vermittlungsstruktur (6), welche einen mit einem Eingang (601) der Vermittlungsstruktur (6) verbunden Demultiplexer (7), einen mit einem Ausgang (602) der Vermittlungsstruktur (6) verbundenen Multiplexer (11) und eine Vielzahl von zwischen dem Demultiplexer (7) und dem Multiplexer (11) parallel angeordneten optischen Toren (9) umfasst, wobei ein optisches Tor (9) dafür konfiguriert ist, ein an dem optischen Tor (9) empfangenes Paket in einem Sperrzustand herauszufiltern und in einem Durchlasszustand durchzulassen,
**dadurch gekennzeichnet, dass**
die Ausgabe der Vermittlungsstruktur (6) ebenfalls an einen schnell abstimmbaren Empfänger (5) übertragen wird, welcher dafür konfiguriert ist
- auf eine Wellenlänge, welche einem Kanal, für den ein assoziiertes optisches Tor (9) überwacht wird, entspricht, abgestimmt zu werden,
- den optischen Leistungspegel der besagten Wellenlänge am Ausgang (602) der Vermittlungsstruktur (6) zu messen,
- den gemessenen optischen Leistungspegel mit mindestens einem vorgegebenen Grenzwert gemäß dem Zustand des überwachten optischen Tors (9) zu vergleichen.

2. Verfahren nach Anspruch 1, wobei der schnell abstimmbare Verstärker (5) in einem nachfolgenden optischen Paketvermittlungsknoten (100) des optischen Wellenlängenmultiplex-Netzwerks angeordnet ist.

3. Verfahren nach Anspruch 1, wobei der schnell abstimmbare Verstärker (5) in einer anderen Paket-Add/Drop-Struktur (401) des optischen Paketvermittlungsknotens angeordnet ist.

4. Verfahren nach Anspruch 1, wobei die Paket-Add/Drop-Struktur (1, 101, 201, 310, 401, 501) mindestens einen schnell abstimmbaren Empfänger umfasst, und wobei der schnell abstimmbare Empfänger (5) einer der mindestens ein schnell abstimmbaren Empfänger ist.

5. Verfahren nach einem der vorstehenden Ansprüche, wobei sich der für die Überwachung verwendete schnell abstimmbare Empfänger (5) im Ruhezustand befindet.

6. Verfahren nach einem der vorstehenden Ansprüche, wobei der schnell abstimmbare Empfänger (5) ein kohärenter Empfänger (36) ist, und wobei der Schritt des Abstimmens auf eine Wellenlänge, welche einem Kanal, für den ein assoziiertes optisches Tor (9) überwacht wird, entspricht, dem Abstimmen eines lokalen Oszillators (41) des kohärenten Empfängers (36) auf die besagte Wellenlänge, welche einem Kanal, für den ein assoziiertes optisches Tor (9) überwacht wird, entspricht, entspricht.

7. Verfahren nach einem der vorstehenden Ansprüche, wobei eine Vielzahl von optischen Toren der Vermittlungsstruktur (6) überwacht wird, ein Zeitschlitz für die Überwachung der Vielzahl von optischen Toren (9) reserviert wird und ein vorgegebenes sequenzielles Vermittlungsschema für die überwachten optischen Tore (9) angewendet wird.

8. Verfahren nach Anspruch 7, wobei das vorgegebene sequenzielle Vermittlungsschema den Schritt des Versetzens der überwachten optischen Tore (9) aufeinanderfolgend, eines nach dem anderen, in einen Durchlass- und einen Sperrzustand während vorgegebenen Zeitdauern umfasst.

9. Verfahren nach Anspruch 8, wobei die vorgegebenen Zeitdauern gemäß der Zeit, welche für das Abstimmen des für die Überwachung verwendeten schell abstimmbaren Empfängers (5) auf die Wellenlänge, die dem mit dem überwachten optischen Tor (9) assoziiert ist, entspricht, erforderlich ist, und der Zeit, welche für das Messen eines optischen Leistungspegels eines empfangenen Signals durch den schnell abstimmbaren Empfänger (5) erforderlich ist, bestimmt werden.

10. Paket-Add/Drop-Struktur (1, 101, 201, 310, 401) eines optischen Paketvermittlungsknotens (100) eines optischen Wellenlängenmultiplex-Netzwerks, wobei die Paket-Add/Drop-Struktur (1, 101, 201, 310, 401) umfasst:
- Eine Vermittlungsstruktur (6), welche einen mit einem Eingang (601) der Vermittlungsstruktur (6) verbunden Demultiplexer (7), einen mit einem Ausgang (602) der Vermittlungsstruktur (6) verbundenen Multiplexer (11) und eine Vielzahl von zwischen dem Demultiplexer (7) und dem Multiplexer (11) parallel angeordneten optischen Toren (9) umfasst, wobei ein optisches Tor (9) dafür konfiguriert ist, ein an dem optischen Tor (9) empfangenes Paket in einem Sperrzustand herauszufiltern und in einem Durchlasszustand durchzulassen,
**dadurch gekennzeichnet, dass** sie ebenfalls mindestens einen schnell abstimmbaren Empfänger (5) umfasst,
wobei der Ausgang der Vermittlungsstruktur (6) an einen der mindestens ein schnell abstimmbaren Empfänger (5) angeschlossen ist, wobei der besagte schnell abstimmbare Empfänger (5) dafür konfiguriert ist,
- ein von der Vermittlungsstruktur (6) ausgegebene Signal zu empfangen, wenn ein optisches Tor (9) der Vermittlungsstruktur (6) überwacht wird,
- auf eine Wellenlänge, welche dem Kanal, für den ein assoziiertes optisches Tor (9) überwacht wird, entspricht, abgestimmt zu werden,
- den optischen Leistungspegel der besagten Wellenlänge am Ausgang der Vermittlungsstruktur (6) zu messen,
- den gemessenen optischen Leistungspegel mit mindestens einem vorgegebenen Grenzwert gemäß dem Zustand des überwachten optischen Tors (9) zu vergleichen.

11. Paket-Add/Drop-Struktur (1, 101, 201) nach Anspruch 10, umfassend einen Sender (15), welcher für das Reservieren eines Zeitschlitzes, wenn optische Tore (9) der Vermittlungsstruktur (6) überwacht werden, konfiguriert ist, und wobei die Vermittlungsstruktur (6) für das Anwenden eines vorgegebenen sequenziellen Vermittlungsschemas auf die überwachten optischen Tore (9) während des reservierten Zeitschlitzes konfiguriert ist.

12. Paket-Add/Drop-Struktur (101, 201) nach Anspruch 10 oder 11, wobei sie weiterhin umfasst:
- Einen optischen Drop-Koppler (3), welcher einen mit einem Eingang (2) der Paket-Add/Drop-Struktur (101, 201) verbundenen Eingang (301) umfasst und für das Übertragen eines empfangenen Signals sowohl an einen ersten Ausgang (302) als auch an einen zweiten Ausgang (303), welcher mit dem Eingang (601) der Vermittlungsstruktur (6) verbunden ist, konfiguriert ist,
- einen optischen Überwachungskoppler (17), welcher einen mit dem Ausgang (602) der Vermittlungsstruktur (6) verbundenen Eingang (171) umfasst und für das Übertragen des von der Vermittlungsstruktur (6) empfangenen Signals sowohl an einen ersten mit einem Ausgang (18) der Paket-Add/Drop-Struktur (101, 201) verbundenen Ausgang (172) als auch an einen zweiten Ausgang (173) konfiguriert ist,
- Eine Zwei-auf-eins-Drop-Vermittlungseinrichtung (19), umfassend einen mit dem mindestens einen schnell abstimmbaren Empfänger (5) verbundenen Ausgang (191), einen mit dem optischen Überwachungskoppler (17) verbundenen ersten Eingang (192) und einen mit dem ersten Ausgang (302) des optischen Drop-Kopplers (3) verbundenen zweiten Eingang (193), wobei die besagte Zwei-auf-eins-Drop-Vermittlungseinrichtung (19) dafür konfiguriert ist, das an ihrem ersten Eingang (192) empfangene Signal durchzulassen und das an ihrem zweiten Eingang (193) empfangene Signal zu sperren, wenn ein optisches Tor (9) der Vermittlungsstruktur (6) überwacht wird, und anderenfalls das an ihrem zweiten Eingang (193) empfangene Signal durchzulassen und das an ihrem ersten Eingang (192) empfangene Signal zu sperren.

13. Paket-Add/Drop-Struktur (201) nach einem der Ansprüche 10 bis 12, wobei sie weiterhin umfasst:
- Einen schnell abstimmbaren Sender (15);
- eine Zwei-auf-eins-Add-Vermittlungseinrichtung (21), umfassend einen mit dem Eingang (301) des optischen Drop-Kopplers (3) verbundenen Ausgang (211), einen mit einem Eingang (2) der Paket-Add/Drop-Struktur (201) verbundenen ersten Eingang (212) und einen zweiten Eingang (213), wobei die Zwei-auf-eins-Add-Vermittlungseinrichtung (21) dafür konfiguriert ist, das an ihrem zweiten Eingang (213) empfangene Signal durchzulassen und das an ihrem ersten Eingang (212) empfangene Signal zu sperren, wenn ein optisches Tor (9) der Vermittlungsstruktur (6) überwacht wird, und anderenfalls das an ihrem ersten Eingang (212) empfangene Signal durchzulassen und das an ihrem zweiten Eingang (213) empfangene Signal zu sperren;
- Einen optischen Add-Koppler (13), welcher einen mit dem Ausgang (172) des optischen Überwachungskopplers (17) verbundenen ersten Eingang (131) und einen zweiten Eingang (132) umfasst und dafür konfiguriert ist, die an seinem ersten und an seinem zweiten Eingang empfangenen Signale zu mischen und das Mischsignal an seinen Ausgang (133), welcher mit dem Ausgang (18) der Paket-Add/Drop-Struktur (201) verbunden ist, zu übertragen;
- eine Eins-auf-zwei-Add-Vermittlungseinrichtung (23), welche einen mit dem schnell abstimmbaren Sender (15) verbundenen Eingang (231), einen mit dem zweiten Eingang (213) der Zwei-zu-eins-Add-Vermittlungseinrichtung (21) verbundenen ersten Ausgang (232) und einen mit dem zweiten Eingang (132) des optischen Add-Kopplers (13) verbundenen zweiten Ausgang (233) umfasst und dafür konfiguriert ist, das an ihrem Eingang (231) empfangene Signal an ihren ersten Ausgang (232) zu übertragen, wenn ein optisches Tor (9) der Vermittlungsstruktur (6) überwacht wird, und anderenfalls an ihren zweiten Ausgang (233) zu übertragen.

14. Paket-Add/Drop-Struktur (310) nach Anspruch 10, wobei sie weiterhin umfasst:
- Einen ersten (5ₐ) und einen zweiten (5_{b}) schnell abstimmbaren Empfänger,
- eine erste Eins-auf-zwei-Vermittlungseinrichtung (25ₐ), umfassend einen ersten (251) und einen zweiten (252) Ausgang, welche jeweils mit dem ersten und dem zweiten schnell abstimmbaren Empfänger (5ₐ, 5_{b}) verbunden sind, und einen Eingang (253), wobei die besagte erste Eins-auf-zwei-Vermittlungseinrichtung (25ₐ) dafür konfiguriert ist, ein an ihrem Eingang (253) empfangenes Signals an ihren ersten (251) oder an ihren zweiten (252) Ausgang zu übertragen,
- einen optischen Drop-Koppler (3), umfassend einen mit einem Eingang (2) der Paket-Drop/Add-Struktur (310) verbundenen Eingang (301), einen ersten Ausgang (302), welcher mit dem Eingang (253) der ersten Eins-auf-zwei-Vermittlungseinrichtung (25ₐ) verbunden ist, und einen zweiten Ausgang (303), welcher mit dem Eingang (601) der Vermittlungsstruktur (6) verbunden ist, wobei der besagte optische Drop-Koppler (3) dafür konfiguriert ist, ein an seinem Eingang (301) empfangenes Signal sowohl an seinen ersten (302) als auch an seinen zweiten Ausgang (303) zu übertragen,
- einen schnell abstimmbaren Sender (15),
- einen optischen Add-Koppler (13), umfassend einen ersten Eingang (131), einen zweiten Eingang (132), welcher mit dem schnell abstimmbaren Empfänger (15) verbunden ist, und einen Ausgang, welcher mit einem Ausgang (18) der Packet-Add/Drop-Struktur (310) verbunden ist, wobei der besagte optische Add-Koppler (13) dafür konfiguriert ist, die an seinem ersten und an seinem zweiten Eingang empfangenen Signale zu mischen und das Mischsignal an seinen Ausgang zu übertragen,
- eine zweite Eins-auf-zwei-Vermittlungseinrichtung (25_{b}), umfassend einen ersten (254) und einen zweiten (255) Ausgang, welche jeweils mit dem ersten (5ₐ) und dem zweiten (5_{b}) schnell abstimmbaren Empfänger verbunden sind, und einen Eingang (256), wobei die besagte zweite Eins-auf-zwei-Vermittlungseinrichtung (25_{b}) dafür konfiguriert ist, ein an ihrem Eingang empfangenes Signals an ihren ersten oder an ihren zweiten Ausgang zu übertragen,
- einen optischen Überwachungskoppler (27), umfassend einen Eingang (271), welcher mit dem Ausgang (602) der Vermittlungsstruktur (6) verbunden ist, einen ersten Ausgang (272), welcher mit dem Eingang (131) des optischen Add-Kopplers (13) verbunden ist, und einen zweiten Ausgang (273), welcher mit dem Eingang (256) der zweiten Eins-auf-zwei-Vermittlungseinrichtung (25_{b}) verbunden ist, wobei der besagte optische Überwachungskoppler (27) dafür konfiguriert ist, das an seinem Eingang (271) empfangene Signal sowohl an seinen ersten (272) als auch an seinen zweiten (273) Ausgang zu übertragen.

15. Optischer Paketvermittlungsknoten (100) mit mindestens einer Paket-Add/Drop-Struktur (1, 101, 201, 310) gemäß einem der Ansprüche 10 bis 14.

16. Optischer Paketvermittlungsknoten (100) nach Anspruch 15 kombiniert mit Anspruch 10, wobei er eine Vielzahl von Paket-Add/Drop-Strukturen (401) umfasst, wobei die besagten Paket-Add/Drop-Strukturen (401) ebenfalls umfassen:
- Eine N-auf-eins-Vermittlungseinrichtung (31), umfassend einen Ausgang (311) welcher mit dem schnell abstimmbaren Empfänger (5) verbunden ist, und eine Vielzahl von Eingängen, wobei die besagte N-auf-eins-Vermittlungseinrichtung (31) dafür konfiguriert ist, ein an einem ihrer Eingänge empfangenes Signal an ihren Ausgang (311) zu übertragen,
- einen optischen Drop-Koppler (3), umfassend einen Eingang (301), welcher mit einem Eingang (2) der Paket-Add/Drop-Struktur (401) verbunden ist, einen ersten Ausgang (302), welcher mit einem Eingang der N-auf-eins-Vermittlungseinrichtung (31) verbunden ist, und einen zweiten Ausgang (303), welcher mit dem Eingang (601) der Vermittlungsstruktur (6) verbunden ist, wobei der besagte optische Drop-Koppler (3) dafür konfiguriert ist, ein an seinem Eingang (301) empfangenes Signal sowohl an seinen ersten (302) als auch an seinen zweiten (303) Ausgang zu übertragen,
- einen schnell abstimmbaren Sender (15),
- einen optischen Add-Koppler (13), umfassend einen Ausgang (133), welcher mit einem Ausgang (18) der Paket-Add/Drop-Struktur (401) verbunden ist, einen ersten Eingang (131) und einen zweiten Eingang (132), welcher mit dem schnell abstimmbaren Sender (15) verbunden ist, wobei der besagte optische Add-Koppler (13) dafür konfiguriert ist, die von seinem ersten (131) und seinem zweiten (132) Eingang empfangenen Signale zu mischen und das Mischsignal an seinen Ausgang (133) zu übertragen,
- einen optischen Überwachungskoppler (29), umfassend einen Eingang (291), welcher mit dem Ausgang (602) der Vermittlungsstruktur (6) verbunden ist, einen ersten Ausgang (292), welcher mit dem zweiten Eingang (131) des optischen Add-Kopplers (13) verbunden ist, und einen zweiten Ausgang (293), wobei der besagte optische Überwachungskoppler (29) dafür konfiguriert ist, das an seinem Eingang (291) empfangene Signal sowohl an seinen ersten (292) als auch an seinen zweiten (293) Ausgang zu übertragen,
- eine Eins-auf-L-Vermittlungseinrichtung (33), umfassend einen Eingang (331), welcher mit dem zweiten Ausgang (293) des optischen Überwachungskopplers (29) verbunden ist, und eine Vielzahl von Ausgängen, wobei einer der Ausgänge mit einem Eingang der N-auf-eins-Vermittlungseinrichtung (31) verbunden ist und die anderen Ausgänge jeweils mit einem Eingang einer N-auf-eins-Vermittlungseinrichtung (31) anderer Paket-Add/Drop-Strukturen (401) verbunden sind, wobei die besagte Eins-auf-L-Vermittlungseinrichtung (33) dafür konfiguriert ist, ein an ihrem Eingang (331) empfangenes Signal an einen ihrer Ausgänge zu übertragen,
wobei die anderen Eingänge der N-auf-eins-Vermittlungseinrichtung (31) mit einem Ausgang einer Eins-auf-L-Vermittlungseinrichtung (33) einer anderen Paket-Add/Drop-Struktur (401) verbunden sind.

## Revendications

1. Procédé de surveillance d'une porte optique (9) d'une structure d'insertion/extraction de paquets (1, 101, 201, 310, 401) d'un noeud de commutation de paquets optiques (100) d'un réseau optique de multiplexage par répartition en longueur d'onde, la structure d'insertion/extraction de paquets (1, 101, 201, 310, 401) comprenant :
- une structure de commutation (6) comprenant un démultiplexeur (7) relié à une entrée (601) de la structure de commutation (6), un multiplexeur (11) relié à une sortie (602) de la structure de commutation (6) et une pluralité de portes optiques (9) réglées en parallèle entre le démultiplexeur (7) et le multiplexeur (11), une porte optique (9) étant configurée pour évacuer par filtrage, dans un état de blocage, ou pour laisser passer, dans un état de passage, un paquet reçu par la porte optique (9),
**caractérisé en ce que** la sortie de la structure de commutation (6) est aussi transmise à un récepteur à accord rapide (5) qui est configuré pour :
- être accordé à une longueur d'onde correspondant à un canal pour lequel une porte optique (9) associée est surveillée,
- mesurer le niveau de puissance optique de ladite longueur d'onde à la sortie (602) de la structure de commutation (6),
- comparer le niveau de puissance optique mesuré à au moins un seuil prédéterminé en fonction de l'état de la porte optique (9) surveillée.

2. Procédé selon la revendication 1 dans lequel le récepteur à accord rapide (5) est situé dans un noeud de commutation de paquets optiques (100) suivant du réseau optique de multiplexage par répartition en longueur d'onde.

3. Procédé selon la revendication 1 dans lequel le récepteur à accord rapide (5) est situé dans une autre structure d'insertion/extraction de paquets (401) du noeud de commutation de paquets optiques (100).

4. Procédé selon la revendication 1 dans lequel la structure d'insertion/extraction de paquets (1, 101, 201, 310, 401, 501) comprend au moins un récepteur à accord rapide et le récepteur à accord rapide (5) est un récepteur parmi l'au moins un récepteur à accord rapide.

5. Procédé selon l'une des revendications précédentes dans lequel le récepteur à accord rapide (5) utilisé pour la surveillance est dans un état de veille.

6. Procédé selon l'une des revendications précédentes dans lequel le récepteur à accord rapide (5) est un récepteur cohérent (36) et l'étape d'accord à une longueur d'onde correspondant à un canal pour lequel une porte optique (9) associée est surveillée correspond à l'accord d'un oscillateur local (41) du récepteur cohérent (36) à ladite longueur d'onde correspondant au canal pour lequel une porte optique (9) associée est surveillée.

7. Procédé selon l'une des revendications précédentes dans lequel une pluralité de portes optiques de la structure de commutation (6) est surveillée, un créneau temporel est réservé pour la surveillance de la pluralité de portes optiques (9) et un schéma de commutation séquentiel prédéterminé est appliqué aux portes optiques (9) surveillées.

8. Procédé selon la revendication 7 dans lequel le schéma de commutation séquentiel prédéterminé comprend l'étape de réglage des portes optiques (9) surveillées, l'une après l'autre, successivement dans un état de passage et dans un état de blocage pendant des périodes prédéterminées.

9. Procédé selon la revendication 8 dans lequel les périodes prédéterminées sont déterminées en fonction du temps nécessaire au récepteur à accord rapide (5) utilisé pour la surveillance pour être accordé à la longueur d'onde correspondant au canal associé à la porte optique (9) surveillée et en fonction du temps nécessaire au récepteur à accord rapide (5) pour mesurer un niveau de puissance optique d'un signal reçu.

10. Structure d'insertion/extraction de paquets (1, 101, 201, 310, 401) d'un noeud de commutation de paquets optiques (100) d'un réseau optique de multiplexage par répartition en longueur d'onde, la structure d'insertion/extraction de paquets (1, 101, 201, 310, 401) comprenant :
- une structure de commutation (6) comprenant un démultiplexeur (7) relié à une entrée (601) de la structure de commutation (6), un multiplexeur (11) relié à une sortie (602) de la structure de commutation (6) et une pluralité de portes optiques (9) réglées en parallèle entre le démultiplexeur (7) et le multiplexeur (11), une porte optique (9) étant configurée pour évacuer par filtrage, dans un état de blocage, ou pour laisser passer, dans un état de passage, un paquet reçu par la porte optique (9),
**caractérisée en ce qu'**elle comprend également au moins un récepteur à accord rapide (5), la sortie de la structure de commutation (6) étant connectée à un récepteur parmi l'au moins un récepteur à accord rapide (5), ledit récepteur à accord rapide (5) étant configuré pour :
- recevoir un signal délivré en sortie par la structure de commutation (6) lorsqu'une porte optique (9) de la structure de commutation (6) est surveillée,
- être accordé à une longueur d'onde correspondant au canal pour lequel une porte optique (9) est surveillée,
- mesurer le niveau de puissance optique de ladite longueur d'onde à la sortie de la structure de commutation (6),
- comparer le niveau de puissance optique mesuré à au moins un seuil prédéterminé en fonction de l'état de la porte optique (9) surveillée.

11. Structure d'insertion/extraction de paquets (1, 101, 201) selon la revendication 10 comprenant un émetteur (15) configuré pour réserver un créneau temporel lorsque des portes optiques (9) de la structure de commutation (6) sont surveillées et dans laquelle la structure de commutation (6) est configurée pour appliquer un schéma de commutation séquentiel prédéterminé aux portes optiques (9) surveillées durant le créneau temporel réservé.

12. Structure d'insertion/extraction de paquets (101, 201) selon la revendication 10 ou 11 comprenant également :
- un coupleur optique d'extraction (3) comprenant une entrée (301) reliée à une entrée (2) de la structure d'insertion/extraction de paquets (101, 201) et configurée pour transmettre un signal reçu à une première sortie (302) et une deuxième sortie (303) reliée à l'entrée (601) de la structure de commutation (6),
- un coupleur optique de surveillance (17) comprenant une entrée (171) reliée à la sortie (602) de la structure de commutation (6) et configurée pour transmettre le signal provenant de la structure de commutation (6) à une première sortie (172) reliée à une sortie (18) de la structure d'insertion/extraction de paquets (101, 201) et à une deuxième sortie (173),
- un commutateur deux pour un d'extraction (19) comprenant une sortie (191) reliée à l'au moins un récepteur à accord rapide (5), une première entrée (192) reliée au coupleur optique de surveillance (17) et une deuxième entrée (193) reliée à la première sortie (302) du coupleur optique d'extraction (3), ledit commutateur deux pour un d'extraction (19) étant configuré pour laisser passer le signal reçu sur sa première entrée (192) et pour bloquer le signal reçu sur sa deuxième entrée (193) lorsqu'une porte optique (9) de la structure de commutation (6) est surveillée et, sinon, pour laisser passer le signal reçu sur sa deuxième entrée (193) et pour bloquer le signal reçu sur sa première entrée (192).

13. Structure d'insertion/extraction de paquets (201) selon l'une des revendications 10 à 12 comprenant également :
- un émetteur à accord rapide (15),
- un commutateur deux pour un d'insertion (21) comprenant une sortie (211) reliée à l'entrée (301) du coupleur optique d'extraction (3), une première entrée (212) reliée à une entrée (2) de la structure d'insertion/extraction de paquets (201) et à une deuxième entrée (213), le commutateur deux pour un d'insertion (21) étant configuré pour laisser passer le signal reçu sur sa deuxième entrée (213) et pour bloquer le signal reçu sur sa première entrée (212) lorsqu'une porte optique (9) de la structure de commutation (6) est surveillée et, sinon, pour laisser passer le signal reçu sur sa première entrée (212) et pour bloquer le signal reçu sur sa deuxième entrée (213) ;
- un coupleur optique d'insertion (13) comprenant une première entrée (131) reliée à la sortie (172) du coupleur optique de surveillance (17) et une deuxième entrée (132) et configuré pour mélanger les signaux reçus sur sa première entrée et sa deuxième entrée et pour transmettre le signal mélangé à sa sortie (133) qui est reliée à la sortie (18) de la structure d'insertion/extraction de paquets (201),
- un commutateur un pour deux d'insertion (23) comprenant une entrée (231) reliée à l'émetteur à accord rapide (15), une première sortie (232) reliée à la deuxième entrée (213) du commutateur deux pour un d'insertion (21) et une deuxième sortie (233) reliée à la deuxième entrée (132) du coupleur optique d'insertion (13) et configurée pour transmettre le signal reçu sur son entrée (231) à sa première sortie (232) lorsqu'une porte optique (9) de la structure de commutation (6) est surveillée et à sa deuxième sortie (233).

14. Structure d'insertion/extraction de paquets (310) selon la revendication 10 comprenant également :
- un premier (5ₐ) et un deuxième (5_{b}) récepteurs à accord rapide,
- un premier commutateur un pour deux (25ₐ) comprenant une première (251) et une deuxième (252) sorties reliées respectivement au premier et au deuxième récepteurs à accord rapide (5ₐ, 5_{b}) et une entrée (253), ledit premier commutateur un pour deux (25ₐ) étant configuré pour transmettre un signal reçu sur son entrée (253) à sa première (251) ou sa deuxième (252) sortie,
- un coupleur optique d'extraction (3) comprenant une entrée (301) reliée à une entrée (2) de la structure d'insertion/extraction de paquets (310), une première sortie (302) reliée à l'entrée (253) du premier commutateur un pour deux (25ₐ) et une deuxième sortie (303) reliée à l'entrée (601) de la structure de commutation (6), ledit coupleur optique d'extraction (3) étant configuré pour transmettre un signal reçu sur son entrée (301) à sa première (302) et sa deuxième (303) sorties,
- un émetteur à accord rapide (15),
- un coupleur optique d'insertion (13) comprenant une première entrée (131), une deuxième entrée (132) reliée à l'émetteur à accord rapide (15) et une sortie reliée à une sortie (18) de la structure d'insertion/extraction de paquets (310), ledit coupleur optique d'insertion (13) étant configuré pour mélanger les signaux reçus sur sa première et sa deuxième entrées et pour transmettre le signal mélangé à sa sortie,
- un deuxième commutateur un pour deux (25_{b}) comprenant une première (254) et une deuxième (255) sorties reliées respectivement au premier (5ₐ) et au deuxième (5_{b}) récepteurs à accord rapide (5ₐ, 5_{b}), et une entrée (256), ledit deuxième commutateur un pour deux (25_{b}) étant configuré pour transmettre un signal reçu sur son entrée à sa première ou sa deuxième sortie,
- un coupleur optique de surveillance (27) comprenant une entrée (271) reliée à la sortie (602) de la structure de commutation (6), une première sortie (272) reliée à l'entrée (131) du coupleur optique d'insertion (13) et une deuxième sortie (273) reliée à l'entrée (256) du deuxième commutateur un pour deux (25_{b}), ledit coupleur optique de surveillance (27) étant configuré pour transmettre le signal reçu sur son entrée (271) à sa première (272) et sa deuxième (273) sorties.

15. Noeud de commutation de paquets optiques (100) comprenant au moins une structure d'insertion/extraction de paquets (1, 101, 201, 310) selon l'une des revendications 10 à 14.

16. Noeud de commutation de paquets optiques (100) selon la revendication 15 combinée avec la revendication 10, comprenant une pluralité de structures d'insertion/extraction de paquets (401), lesdites structures d'insertion/extraction de paquets (401) comprenant aussi :
- un commutateur N pour un (31) comprenant une sortie (311) reliée au récepteur à accord rapide (5) et une pluralité d'entrées, ledit commutateur N pour un (31) étant configuré pour transmettre un signal reçu sur une de ses entrées à sa sortie (311),
- un coupleur optique d'extraction (3) comprenant une entrée (301) reliée à une entrée (2) de la structure d'insertion/extraction de paquets (401), une première sortie (302) reliée à une entrée du premier commutateur N pour un (31) et une deuxième sortie (303) reliée à l'entrée (601) de la structure de commutation (6), ledit coupleur optique d'extraction (3) étant configuré pour transmettre un signal reçu sur son entrée (301) à sa première (302) et sa deuxième (303) sorties,
- un émetteur à accord rapide (15),
- un coupleur optique d'insertion (13) comprenant une sortie (133) reliée à une sortie (18) de la structure d'insertion/extraction de paquets (401), une première entrée (131) et une deuxième entrée (132) reliées à l'émetteur à accord rapide (15), ledit coupleur optique d'insertion (13) étant configuré pour mélanger les signaux provenant de sa première (131) et de sa deuxième (132) entrées et pour transmettre le signal mélangé à sa sortie (133),
- un coupleur optique de surveillance (29) comprenant une entrée (291) reliée à la sortie (602) de la structure de commutation (6), une première sortie (292) reliée à la deuxième entrée (131) du coupleur optique d'insertion (13) et une deuxième sortie (293), ledit coupleur optique de surveillance (29) étant configuré pour transmettre le signal provenant de son entrée (291) à sa première (292) et sa deuxième (293) sorties,
- un commutateur un pour L (33) comprenant une entrée (331) reliée à la deuxième sortie (293) du coupleur optique de surveillance (29) et une pluralité de sorties, une des soties étant reliée à une entrée du commutateur N pour un (31) et les autres sorties étant reliées respectivement à une entrée d'un commutateur N pour un (31) d'autres structures d'insertion/extraction de paquets (401), ledit commutateur un pour L (33) étant configuré pour transmettre un signal reçu sur son entrée (331) à une de ses sorties,
les autres entrées du commutateur N pour un (31) étant reliées à une sortie d'un commutateur un pour L (33) d'une autre structure d'insertion/extraction de paquets (401).
